Europäisches Patentamt

European Patent Office

Office européen des brevets

(11) Veröffentlichungsnummer: **0 261 407 B1**

(12) **EUROPÄISCHE PATENTSCHRIFT**

(45) Veröffentlichungstag der Patentschrift: **19.05.93**

(21) Anmeldenummer: **87112142.2**

(22) Anmeldetag: **21.08.87**

(51) Int. Cl.⁵: **G03B 27/34**

(54) **Verfahren und Vorrichtung zum automatischen Scharfstellen in einem fotografischen Vergrösserungs- oder Kopiergerät mit veränderlichem Vergrösserungsmassstab.**

(30) Priorität: **29.08.86 IT 484086**

(43) Veröffentlichungstag der Anmeldung:
**30.03.88 Patentblatt 88/13**

(45) Bekanntmachung des Hinweises auf die
Patenterteilung:
**19.05.93 Patentblatt 93/20**

(84) Benannte Vertragsstaaten:
**AT CH DE FR GB LI**

(56) Entgegenhaltungen:
**DE-A- 1 772 304**
**DE-A- 2 805 030**
**DE-A- 3 301 483**
**US-A- 4 281 927**
**US-A- 4 488 804**

(73) Patentinhaber: **Durst Phototechnik GmbH**
**Gerbergasse 58**
**I- 39100 Bozen(IT)**

(72) Erfinder: **Delueg, Verner**
**Oberdorf, 65**
**I- 39040 Vahrn/Varna(IT)**

**Beschreibung**

Die Erfindung betrifft ein Verfahren und eine Vorrichtung zum automatischen Scharfstellen in einem fotografischen Vergrößerungs – oder Kopiergerät mit veränderlichem Vergrößerungsmaßstab.

Bekannte Vergrößerungsgeräte umfassen eine Aufnahmefläche für das Kopiermaterial, insbesondere Fotopapier, einen Optikträger als Halterung für ein ausgewähltes Vergrößerungsobjektiv sowie einen Bildbühnenhalter zur Aufnahme einer zu kopierenden Filmvorlage. Optikträger und Bildbühne sind Teile eines Projektionskopfes, mittels welchem die Filmvorlage auf das Kopiermaterial projiziert wird. Damit das Objektiv ein scharfes Abbild der Vorlage in der Kopierebene zeichnet, müssen für die Abstände zwischen Objektiv – und Vorlagenebene und zwischen Objektiv – und Kopierebene bekanntlich folgende Beziehungen erfüllt sein:

$$a = (1 + \tfrac{1}{m}) f$$
$$b = (1 + m) f \qquad (1)$$
$$c = (2 + m + \tfrac{1}{m}) f \text{ mit } c = a + b$$

Dabei ist $a$ der Abstand zwischen Objektiv – und Vorlagenebene, $b$ der Abstand zwischen Objektiv – und Kopierebene, $c$ der Abstand zwischen Kopier – und Vorlagenebene, $m$ das Vergrößerungsverhältnis und $f$ die Brennweite des verwendeten Objektivs.

Bei bekannten Vergrößerungsgeräten ist die Kopierebene im allgemeinen fix, während Bildbühnenhalter und Optikträger in Richtung der optischen Achse des Objektivs verstellbar sind. Das Einstellen eines gewünschten Vergrößerungsverhältnisses geschieht, indem der Projektionskopf des Vergrößerers relativ zur fixen Kopierebene verstellt, d. h. der Abstand $c$ zwischen Vorlagenebene und Kopierebene verändert wird. Zum Scharfstellen des Bildes entsprechend einem eingestellten Vergrößerungsverhältnis muß sodann das Objektiv in die Stellung geführt werden, für welche die Beziehungen (1) erfüllt sind. Für eine automatische Scharfstelleinrichtung ergibt sich daraus die Notwendigkeit, für jede Einstellung die absolute Position sowohl des Bildbühnenhalters als auch des Optikträgers zu ermitteln.

Elektronische Einrichtungen zum Erfassen derartiger absoluter Positionswerte sind beispielsweise sogenannte digitale Drehkodierer, wo eine Kodierscheibe mit dem beweglichen Teil gekoppelt ist und durch ihre Drehwinkelstellung die Position des beweglichen Teiles kodiert. Wird hohe Meßauflösung gefordert, so ist der Meß – bzw. Einstellbereich eines derartigen Systems zwangsläufig beschränkt, da die Kodierscheibe nur eine begrenzte Anzahl Markierungen enthalten kann. Auf jeden Fall würden die Herstellungskosten bei der in Frage stehenden Anwendung, wo hohe Auflösung über einen relativ breiten Bereich gefordert wird, unzulässig hoch.

Aus der DE – A 28 05 030 ist ein Verfahren und eine Einrichtung zum automatischen Scharfstellen einer Reproduktionskamera bekannt, wo für die Positionserfassung inkrementale Drehkodierer vorgesehen sind. Dabei wird durch die Bewegung einer Drehscheibe eine Folge von elektrischen Impulsen erzeugt und der Verstellweg von einer bestimmten Anfangslage aus durch Zählung der abgegebenen Impulse ermittelt. Um den Einfluß eventueller Fehler beim Zählen der auftretenden Impulse möglichst gering zu halten und absolute Positionswerte zu gewinnen, ist vorgesehen, daß der Bildbühnenhalter und der Optikträger zu Beginn eines jeden Einstellvorganges je in eine Referenzstellung gefahren werden, welcher ein spezifischer, den Abstand von der Kopierebene kennzeichnender Zählwert zugeordnet ist. Beim Überfahren einer Referenzstellung wird die zugehörige Zähleinrichtung unabhängig vom erreichten Zählerstand auf den der Referenzstellung fest zugeordneten Zählwert gesetzt, wodurch ein Bezugswert festgelegt ist. Nach der Wahl eines gewünschten Vergrößerungsverhältnisses $m$ und bei bekannter Objektivbrennweite $f$ erfolgt die Scharfstellung dann in der Weise, daß die Abstände $a$ und $b$ in einer Rechenvorrichtung aufgrund der weiter oben angegebenen Beziehungen (1) errechnet und Bildbühnenhalter und Optikträger mittels einer motorischen Verstellvorrichtung in die entsprechenden Stellungen bewegt werden.

Der Einsatz einer inkrementalen Meßeinrichtung ist vorteilhaft hinsichtlich Kosten und erreichbarer Auflösung, die Notwendigkeit der Referenzpunkte auf den Wegstrecken der Bildbühne und des Objektivs bedeutet aber erhöhten Aufwand an Detektoren wie Mikroschalter oder dgl. zum Detektieren dieser Referenzpositionen. Das Erfordernis der genauen Positionierung der Detektoren birgt zudem die Gefahr einer möglichen Instabilität im Lauf der Zeit in sich. Schließlich setzt das angegebene Verfahren die Kenntnis oder eine vorhergehende Bestimmung der Brennweite des verwendeten Objektivs voraus, da es auf einem von den Beziehungen (1) hergeleiteten Rechenergebnis basiert.

Der Erfindung liegt die Aufgabe zugrunde, ein Verfahren und eine Vorrichtung zum automatischen Scharfstellen anzugeben, die genaue und wiederholbare Resultate erbringen, wobei die Vorrichtung einfach in der Handhabung und im Vergleich zu bekannten Vorrichtungen kostengünstig in der Herstellung sein soll.

Das erfindungsgemäße Verfahren und die Vorrichtung, die diese Aufgabe lösen, weisen die in den Ansprüchen 1 und 6 angeführten Merkmale auf.

Die Bestimmung der Scharfstellposition für ein beliebiges Vergrößerungsverhältnis durch Interpolation zwischen zwei vorab bestimmten und in einer Speichervorrichtung festgehaltenen Scharfstellpositionen erübrigt die Kenntnis der absoluten Position der Filmvorlage und des Objektivs mit dem Vorteil, daß Meß – und Positioniereinrichtung nicht mit absoluter Genauigkeit zu arbeiten brauchen, sondern lediglich Wiederholbarkeit der Messung und Wiederkehrgenauigkeit der Positioniereinrichtung gewährleistet sein müssen. Außerdem besteht nicht die Notwendigkeit, objektivbezogene Kennwerte, insbesondere die genaue Objektivbrennweite zu kennen oder vorab zu bestimmen.

Das Festhalten einzelner Positionen mittels elektronischer Speicherung digitalisierter Positionswerte macht die anfängliche Kalibrierung der Vorrichtung mühelos und rasch auch dann, wenn zur Erzielung hoher Scharfstellgenauigkeit eine größere Anzahl vorgegebener Scharfstellpositionen innerhalb des interessierenden Vergrößerungsbereichs abgespeichert werden sollen.

Weitere Merkmale und Vorteile des erfindungsgemäßen Verfahrens und der Vorrichtung zu dessen Durchführung ergeben sich aus den abhängigen Ansprüchen in Verbindung mit der Beschreibung eines bevorzugten Ausführungsbeispiels, das im folgenden anhand der beigefügten Zeichnungen erläutert wird. Diese zeigen:

Figur 1 – eine schematische Darstellung eines fotografischen Vergrößerungsgerätes mit eingebauter automatischer Scharfstellvorrichtung;

Figur 2 – ein Blockschaltbild der Schaltung der Scharfstellvorrichtung.

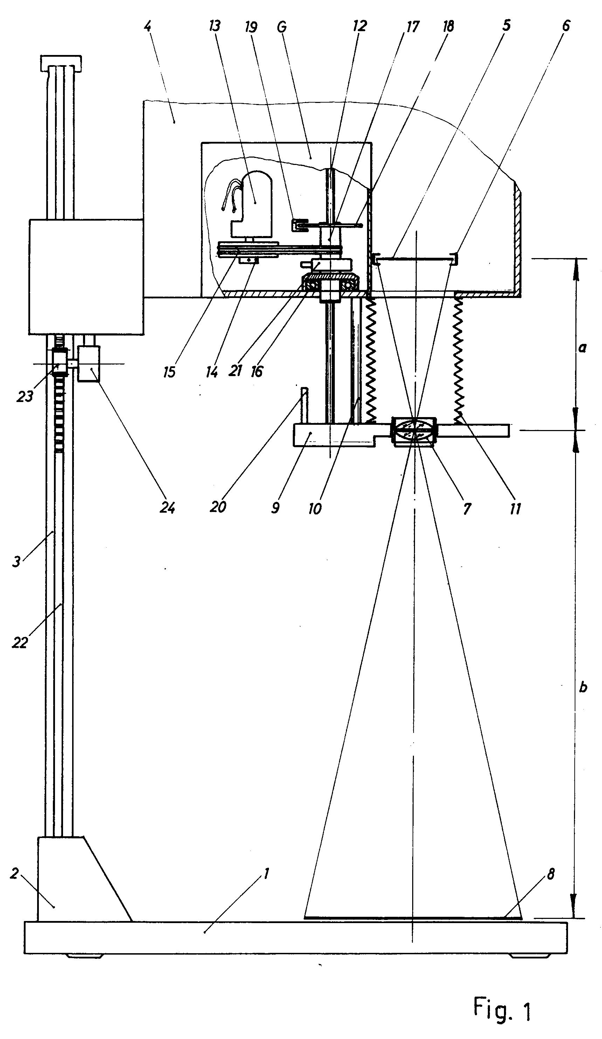

In Figur 1 ist ein fotografisches Vergrößerungsgerät schematisch und beschränkt auf jene Teile, die zum Verständnis der Scharfstellvorrichtung notwendig sind, dargestellt. Das Vergrößerungsgerät umfaßt im wesentlichen ein Grundbrett 1, auf dem mittels einer Befestigung 2 eine Tragsäule 3 befestigt ist und einen Projektionskopf 4, der von der Säule getragen wird und längs derselben verschiebbar ist. Der Projektionskopf 4 enthält eine Lichtquelle und Lichtleitmittel (beide in der Zeichnung nicht dargestellt) zum Ausleuchten einer zu kopierenden Filmvorlage 5, die in einer Bildbühne 6 gehalten und von einem Objektiv 7 auf das Kopiermaterial 8 abgebildet wird. Ein Optikträger 9 als Halterung für das Objektiv 7 ist in Führungen 10 in Richtung der optischen Achse relativ zur Bildbühne bewegbar. Der Lichtweg im Bereich zwischen Vorlage und Objektiv ist von einem Balgen lichtdicht umhüllt. Eine mit dem Optikträger 9 fest verbundene, parallel zur optischen Achse verlaufende Gewindestange 12 ist Teil einer Antriebseinheit, die in einem am Projektionskopf befestigten Gehäuse G untergebracht ist. Die Antriebseinheit umfaßt einen Elektromotor 13 mit einer Riemenscheibe 14, die über einen Riemen 15 mit einer Gewindebuchse 17 gekoppelt ist. Die Gewindebuchse ist in einem am Boden des Gehäuses G befestigten Kugellager 16 drehbar und nimmt in ihrem Innern die Gewindestange 12 formbündig auf, die auf diese Weise durch die Drehbewegung der Gewindebuchse längsverschoben wird. Eine mit der Gewindebuchse drehfest verbundene Scheibe 18 weist eine Anzahl auf einer konzentrischen Kreisbahn angeordnete Löcher oder Spalte auf, die auf einen optischen Leser, beispielsweise ein fotoelektrisches Relais ausgerichtet sind, so daß bei Drehung der Scheibe 18 eine Folge von elektrischen Impulsen in Übereinstimmung mit dem Durchgang der einzelnen Löcher oder Spalte durch die aktive Zone des Lesers entsteht.

Für die Festlegung einer definierten Anfangsstellung, auf welche alle weiteren Stellungen bezogen werden, weist der Optikträger einen Anschlagstift 20 auf, der bei einer vorgegebenen oberen Extremstellung des Trägers auf einen Anschlagring 21 der Gewindebuchse 17 einwirkt und deren Drehbewegung blockiert. Durch Zählen der vom optischen Leser während der Bewegung des Optikträgers von der Anfangsstellung aus abgegebenen Impulse ist die augenblickliche Stellung des Trägers ermittelbar. Das Anhalten der Gewindebuchse 17 durch einfachen Anschlag des Anschlagstiftes 21 ohne Reibungs – oder Trägheitseffekt gewährleistet eine exakte Festlegung der Anfangsstellung des Optikträgers und exakte Reproduzierbarkeit derselben.

Für die Erfassung der Position des Projektionskopfes 4 längs der Tragsäule 3 weist letztere eine Zahnung 22 auf, die sich im wesentlichen über die volle Länge der Säule erstreckt und mit einem Zahnrad 23 im Eingriff steht, das auf der Welle eines am Projektionskopf befestigten Potentiometers 24 sitzt. Der Einsatz eines derartigen analogen Meßwertgebers für die Erfassung der Position des Projektionskopfes gegenüber der Position der Kopierebene erweist sich als zweckmäßig, weil hier geringere Anforderungen hinsichtlich Meßauflösung bestehen. Im übrigen wird vorteilhafterweise der Umstand genutzt, daß herkömmliche Vergrößerungsgeräte wegen Erfordernissen im Zusammenhang mit der Bestimmung der Belichtungswerte zumeist schon mit einer derartigen Einrichtung ausgestattet sind.

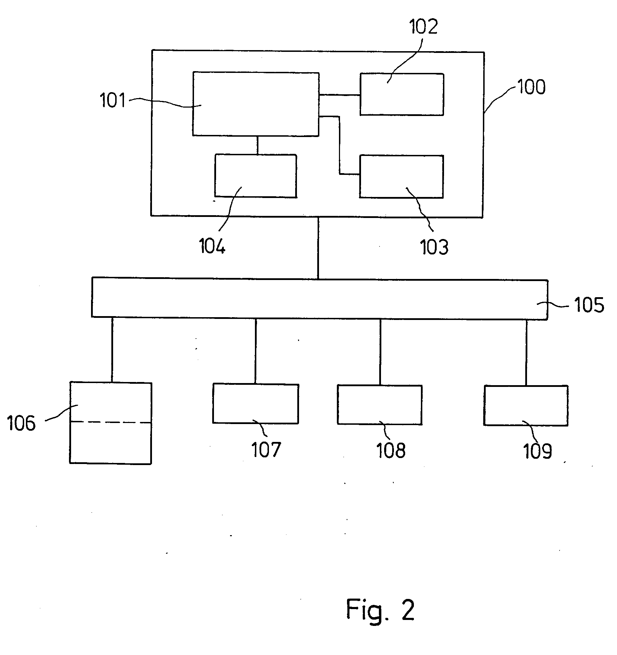

In Figur 2 ist ein Blockschaltbild des Schaltungsteils der erfindungsgemäßen Scharfstellvorrichtung dargestellt. Kernstück der Schaltung ist ein Mikroprozessorsystem 100, das einen Mikroprozessor 101 mit seinen peripheren Elementen wie einen Lesespeicher (ROM) 102, einen Speicher mit freiem Zugriff (RAM) 103 und einen Taktgeber 104 umfaßt. Mit dem Mikroprozessor über eine Schnittstelle 105 verbunden sind eine Anzeige- und Bedienungstafel 106, der Positionsdetektor 107 für die Objektivebene, der Positionsdetektor 108 für die Vorlagenebene sowie die Motorsteuerung 109 der Antriebseinheit für den Optikträger. Mit Bezug auf die vorhergehende Beschreibung der Einrichtung zur Positionserfassung ist das Ausgangssignal des Positionsdetektors 107 das Ergebnis der Zählung der von der Drehscheibe 18 bei ihrer Drehung erzeugten Impulse und das Ausgangssignal des Positionsdetektors 108 der digitalisierte Wert der am Meßpotentiometer 24 des Projektionskopfes abgegriffenen Spannung.

Der Rechner ist so vorbereitet, daß er für eine gegebene Position der Bildbühne, d. h. für ein gegebenes Vergrößerungsverhältnis die zugehörige Scharfstellposition des Objektivs durch Interpolation zwischen zwei vorab ermittelten und gespeicherten Scharfstellpositionen bezüglich zweier vorgegebener Vergrößerungsverhältnisse errechnet. In der Praxis wird in einer Kalibrierphase eine Wertetabelle in den Speicher 103 eingeschrieben, die die Scharfstellposition für eine diskrete Anzahl unterschiedlicher Vergrößerungsverhältnisse darstellt. In der Arbeitsphase wird dann die Position der Bildbühne für ein beliebig eingestelltes Vergrößerungsverhältnis mit der Tabelle verglichen und im Falle, daß sie mit keiner der gespeicherten Positionen identisch ist, wird die zugehörige Scharfstellposition des Objektivs durch Interpolation aus den zwei nächstliegenden Positionen der Tabelle errechnet.

Die Funktionsweise der beschriebenen Vorrichtung und deren Handhabung ist folgendermaßen: durch Betätigen entsprechender Tasten der Bedienungstafel 106 wird die Vorrichtung auf Kalibrierbetrieb eingestellt und ein Startbefehl ausgelöst. Dabei setzt sich der Motor 13 in Bewegung und fährt zunächst den Optikträger in die durch die Anschlagelemente 20, 21 der Antriebseinheit festgelegte Anfangsstellung. Im Augenblick des Anhaltens der Gewindebuchse 17 und damit des Optikträgers bricht die vom optischen Leser abgegebene Impulsfolge ab, woraus ein Signal zum Stoppen des Motors und Rückstellen des Impulszählers gewonnen wird. Damit ist der Anfangsstellung des Optikträgers ein Anfangszählwert des Positionsdetektors 107 für die Objektivebene zugeordnet. Nun wird der Projektionskopf entsprechend einem beliebigen Vergrößerungsmaßstab, beispielsweise am unteren Ende des einstellbaren Vergrößerungsbereichs positioniert und das Bild in der Kopierebene manuell scharfgestellt, indem die Tasten eines Tastenpaares der Motorsteuerung betätigt werden, um den Optikträger in die eine oder andere Richtung bis zum Erreichen der maximalen Schärfe des projizierten Bildes zu bewegen. Vorzugsweise wird eine spezielle Vorlage mit geeigneter Bildstruktur verwendet, um die Beurteilung der Bilddefinition bzw. des Schärfegrades zu erleichtern. Ist die exakte Scharfstellposition aufgefunden, werden die entsprechenden von den Positionsdetektoren 107 und 108 gelieferten Positionswerte für die Objektiv- bzw. Vorlagenebene durch Betätigen einer hierfür vorgesehen Taste der Bedienungstafel in den Speicher 103 eingeschrieben. Anschließend wird der Projektionskopf in eine weitere, einem anderen Vergrößerungsverhältnis ensprechende Stellung gebracht, das Bild wie oben beschrieben aufs neue scharfgestellt und die der neuen Stellung entsprechenden Positionswerte für Objektiv und Vorlage gespeichert. Auf diese Art und Weise wird für eine Reihe Projektionskopfstellungen für unterschiedliche Vergrößerungsverhältnisse verfahren, bis schließlich im Speicher eine Tabelle von Werten eingeschrieben ist, die paarweise feste Scharfstellpositionen für Objektiv- und Vorlageebene innerhalb des gesamten vorgesehenen Vergrößerungsbereichs darstellen. Die Anzahl der zu speichernden Scharfstellpunkte hängt von der geforderten Genauigkeit der automatischen Scharfstellung ab. Dank der Einfachheit der auszuführenden Operationen erweist sich die Kalibrierung als mühelos und rasch auch bei einer beträchtlichen Anzahl Kalibrierpunkte.

Ist das Vergrößerungsgerät für das Arbeiten mit unterschiedlichen Objektiven vorgesehen, wird eine Kalibrierung für jedes der Objektive vorgenommen, wobei die jeweiligen Kalibrierwerte in gesonderten Speicherkanälen gespeichert werden. Die Kalibrierwerte bleiben permanent gespeichert und das Vergrößerungsgerät ist somit für die ständige automatische Scharfstellung eingerichtet. Diese erfolgt beim praktischen Arbeiten mit dem Vergrößerungsgerät folgendermaßen:
Bei jeder Inbetriebnahme des Vergrößerers, beispielsweise beim Einschalten des Gerätes wird zunächst der Optikträger selbsttätig in die Bezugsanfangsstellung gefahren und der dem optischen Leser zugeordnete Impulszähler in Übereinstimmung mit dieser Stellung auf Null gesetzt. Nach dem Positionieren des Projektionskopfes entsprechend einem gewünschten Vergrößerungsverhältnis ermittelt das Mikroprozessorsystem über den Positionsdetektor 108 den zugehörigen Positionswert und vergleicht ihn mit den in der gespeicherten Tabelle eingeschriebenen Werten: stimmt die Position mit einer der gespeicherten Positionen überein, ist auch die zugehörige Scharfstellposition des Objektivs bereits im Speicher; stimmt die Stellung des Projektionskopfes hingegen mit keiner der gespeicherten Stellungen überein, sondern fällt sie in den Bereich zwischen zwei derselben, so errechnet die Rechenvorrichtung die Scharfstellposition des Objektivs aus den Werten der benachbarten Stellungen durch Interpolation. Sobald der der Scharfstellposition zugeordnete Wert feststeht, wird die Motorsteuerung selbsttätig aktiviert, um den Optikträger in die entsprechende, vom Positionsdetektor 107 identifizierte Stellung zu bringen. Die Zählrichtung der dem optischen Leser zugeordneten Zählvorrichtung ändert sich mit der Drehrichtung des Motors bzw. mit der Polarität seiner Versorgungspannung, so daß der Zählwert jederzeit die effektive Stellung des Optikträgers angibt. Die erfindungsgemäße Vorrichtung nimmt also die Scharfstellung für ein beliebiges Vergrößerungsverhältnis selbsttätig vor, indem bei jeder Verstellung des Projektionskopfes der Optikträger in die Scharfstellposition nachgeführt wird.

Bei Benutzung eines Kopierrahmens für das Kopiermaterial kommt die Bildebene häufig in eine vom Grundbrett des Vergrößerungsgerätes verschiedene Ebene zu liegen, so daß die Scharfstellebene entsprechend der Höhe des Kopierrahmens versetzt werden muß. In der erfindungsgemäßen Vorrichtung erfolgt die Versetzung der Scharfstellebene in Anpassung an die Höhe unterschiedlicher Rahmen durch geeignete Korrektur der vom Positionsdetektor 108 des Projektionskopfes gelieferten Werte. Hierfür wird der Abstand zwischen Bildebene und Grundbrettebene bzw. der Abstand der Bildebene von der Ebene, in bezug auf welche die Kalibrierung vorgenommen wurde, über eine entsprechende Eingabeeinrichtung der Bedienungstafel in das Mikroprozessorsystem eingegeben und dieses korrigiert die vom Positionsdetektor 108 gelieferten Werte um denselben Betrag. Auf diese Weise behält die gespeicherte Wertetabelle ihre Gültigkeit bei und es besteht keine Notwendigkeit einer neuen Kalibrierung. Die eingegebene Fokus‒Verschiebung wird vorteilhafterweise auf dem Anzeigefeld 106 angezeigt.

Vorzugsweise wird jede Scharfstellposition in ein und derselben Bewegungsrichtung des Optikträgers angenähert, beispielsweise von unten nach oben, um störende Auswirkungen mechanischen Spiels möglichst gering zu halten und ausreichende Wiederkehrgenauigkeit der Einstellpositionen zu gewährleisten. Zu diesem Zwecke wird eine bestimmte Scharfstellposition wenn nötig zunächst um eine kurze Strecke überfahren, um sie dann von der bevorzugten Seite aus anzunähern.

Der Null‒Abgleich durch Anfahren der Anfangsstellung des Optikträgers erfolgt automatisch bei jeder Inbetriebnahme des Gerätes; im Laufe der Arbeiten kann bei Bedarf ein neuerlicher Abgleich durch Betätigen einer hierfür vorgesehenen Taste "Re‒Start" der Bedienungstafel ausgelöst werden.

Die Berechnung der Scharfstellpositionen erfolgt vorzugsweise durch lineare Interpolation. In einer Weiterbildung der automatischen Scharfstellvorrichtung wird ein Interpolationsverfahren höherer mathematischer Ordnung angewandt, wodurch mit erheblich weniger gespeicherten Festpunkten eine ausreichende Scharfstellgenauigkeit erreicht wird.

Das erfindungsgemäße Verfahren und die Vorrichtung zu dessen Anwendung sind mit Bezug auf ein Vergrößerungsgerät beschrieben, in welchem die Vorlagenebene gegenüber einer ortsfesten Kopierebene bewegbar ist. Sie gelten aber ebenso für den Fall, daß die Vorlage in fixer Stellung verbleibt und die Kopierebene bewegbar ist.

**Patentansprüche**

1. Verfahren zum automatischen Scharfstellen in einem fotografischen Vergrößerungs‒ oder Kopiergerät mit veränderlichem Vergrößerungsmaßstab und umfassend eine Kopierebene, einen relativ zur Kopierebene verstellbaren Bildbühnenhalter (6) und einen relativ zum Bildbühnenhalter (6) verstellbaren Optikträger (9) sowie Mittel (12,17,18,19,22,23,24) zur Erfassung der Positionen des Bildbühnenhalters (6) und des Optikträgers (9), dadurch gekennzeichnet, daß

   ‒ in einer Kalibrierphase für eine Anzahl Positionen des Bildbühnenhalters (6) entsprechend unterschiedlichen Vergrößerungsverhältnissen die zugehörigen Scharfstellpositionen des Optikträgers (9) manuell aufgesucht und die dem jeweiligen Vergrößerungsverhältnis zugeordneten Positionswerte des Bildbühnenhalters (6) und des Optikträgers (9) gespeichert werden;

   ‒ in der automatischen Scharfstellphase die einer beliebigen Position des Bildbühnenhalters (6) entsprechend einem beliebigen Vergrößerungsverhältnis zukommende Scharfstellposition des Optikträgers (9) rechnerisch mittels Interpolation zwischen den gespeicherten, der Position entsprechend dem beliebigen Vergrößerungsverhältnis benachbarten Scharfstellpositionen ermittelt und der Optikträger (6) motorisch in die ermittelte Position gefahren wird.

2. Verfahren nach Anspruch 1, dadurch gekennzeichnet, daß die Scharfstellpositionen aus der Anzahl der gespeicherten Positionen durch ein Interpolationsverfahren höherer mathematischer Ordnung ermittelt werden.

3. Verfahren nach Anspruch 1, dadurch gekennzeichnet, daß die Positionswerte mit Hilfe eines inkrementalen Meßwertgebers bezüglich einer definierten Ausgangsposition erfaßt werden, welcher ein fester Ausgangswert des Meßwertgebers zugeordnet ist.

4. Verfahren nach Anspruch 3, dadurch gekennzeichnet, daß zum Null-Abgleich der Positionsmeßeinrichtung die Ausgangsposition bei der Inbetriebnahme des Vergrösserungsgerätes selbsttätig und/oder während des Betriebs auf entsprechenden Eingabebefehl seitens der Bedienungsperson angefahren wird.

5. Verfahren nach einem der vorhergehenden Ansprüche, dadurch gekennzeichnet, daß eine ermittelte Scharfstellposition letztlich in einer bevorzugten Bewegungsrichtung angenähert wird.

6. Vorrichtung zur Durchführung des Verfahrens nach einem der Ansprüche 1 bis 5 in einem fotografischen Vergrößerungs- oder Kopiergerät mit einer Kopierebene, einem relativ zur Kopierebene verstellbaren Bildbühnenhalter (6) und einem relativ zum Bildbühnenhalter (6) verstellbaren Optikträger (9) sowie mit Mitteln zur Positionserfassung (12, 17, 18, 19, 22, 23, 24) des Bildbühnenhalters (6) und des Optikträgers (9), gekennzeichnet durch eine Speichervorrichtung (103) zum Speichern einer Anzahl Positionen des Bildbühnenhalters (6) und des Optikträgers (9) in paarweiser Zuordnung zueinander, eine Rechenvorrichtung (101), ausgebildet zum Errechnen der Position des Optikträgers (9) in Zuordnung zu einer beliebigen, von den gespeicherten Positionen verschiedenen Position des Bildbühnenhalters (6) mittels Interpolation zwischen den einander zugeordneten, der beliebigen Position benachbarten, gespeicherten Positionen, sowie einen motorischen Antrieb (12 bis 17) zum Bewegen des Optikträgers (9) in die errechnete Position.

7. Vorrichtung nach Anspruch 6, dadurch gekennzeichnet, daß die Speicher- und Rechenvorrichtung (103, 101) Teile eines Mikroprozessorsystems (100) sind.

8. Vorrichtung nach Anspruch 6, dadurch gekennzeichnet, daß die Mittel zur Positionserfassung eine Quantisierungsvorrichtung (18, 19, 22, 23, 24) zum Umsetzen jeder Position des Bildbühnenhalters (6) und des Optikträgers (9) in einen digitalen, die jeweilige Position kennzeichnenden Zahlenwert aufweisen.

9. Vorrichtung nach Anspruch 8, dadurch ge-kennzeichnet, daß die Quantisierungsvorrich-tung für die Positionen des Optikträgers (9) eine dynamisch mit diesem gekoppelte Drehscheibe (18) mit einer Reihe Bezugszeichen sowie eine Detektor- und Zähleinrichtung (19) für die Bezugszeichen während der Drehung der Scheibe (18) aufweist.

10. Vorrichtung nach Anspruch 9, dadurch gekennzeichnet daß die Bezugszeichen auf der Drehscheibe (18) kreislinienförmig angeordnete Löcher oder Spalte sind und die Detektor- und Zähleinrichtung (19) einen optischen Leser umfaßt.

11. Vorrichtung nach einem der Ansprüche 9 oder 10, dadurch gekennzeichnet, daß die Drehscheibe (18) auf einer Gewindebuchse (17) festsitzt, die in einer relativ zum Bildbühnenhalter (6) festen Ebene drehbar ist und eine mit einem Ende am Optikträger (9) befestigte Gewindestange (12) aufnimmt.

12. Vorrichtung nach Anspruch 11, dadurch gekennzeichnet, daß der Optikträger (9) durch einen mit der Gewindebuchse (17) gekoppelten Antrieb (13) verstellbar ist.

13. Vorrichtung nach Anspruch 12, dadurch gekennzeichnet, daß durch den Eingriff eines Anschlagelementes (20) des Optikträgers (9) in ein komplementäres Anschlagelement (21) der Gewindebuchse (17) eine vorbestimmte Endposition des Optikträgers (9) festgelegt ist.

14. Vorrichtung nach einem oder mehreren der vorhergehenden Ansprüche 7 bis 13, dadurch gekennzeichnet, daß die Zählrichtung der Zähleinrichtung von der Polarität der Spei-sespannung des elektrischen Antriebs be-stimmt wird.

**Claims**

1. Method for automatic focusing in a photographic enlarging or copying apparatus having a variable enlargement scale and comprising a copying plane, an image stage holder (6) which is movable relative to the copying plane, and a lens carrier (9) which is movable relative to the image stage holder (6), and means (12, 17, 18, 19, 22, 23, 24) for detecting the positions of the image stage holder (6) and the lens carrier (9), characterised in that
   - in a calibration phase, for a number of positions of the image stage holder (6) corresponding to different enlargement ratios the associated focus positions of the lens carrier (9) are located manually and the position values of the image stage holder (6) and the lens carrier (9) assigned to the particular enlargement ratio are stored;

- in the automatic focusing phase, the appropriate focus position of the lens carrier (9) for a desired position of the image stage holder (6) corresponding to a desired enlargement ratio is calculated by interpolation between the stored focus positions adjacent to the position corresponding to the desired enlargement ratio and the lens carrier (6) is motor-driven into the position determined.

2. Method according to claim 1, characterised in that the focus positions are determined from the number of stored positions by an interpolation process of relatively high mathematical order.

3. Method according to claim 1, characterised in that the position values are detected with the aid of an incremental measurement transducer with reference to a defined starting position to which a fixed starting value of the measurement transducer is assigned.

4. Method according to claim 3, characterised in that, for zeroing the position measuring device, the starting position is approached automatically when the enlarging device is put into operation and/or is approached during operation in response to a corresponding input command on the part of the operator.

5. Method according to any one of the preceding claims, characterised in that a focus position determined is ultimately approached in a preferred direction of movement.

6. Device for carrying out the method according to any one of claims 1 to 5 in a photographic enlarging or copying apparatus having a copying plane, an image stage holder (6) which is movable relative to the copying plane and a lens carrier (9) which is movable relative to the image stage holder (6) and means (12, 17, 18, 19, 22, 23, 24) for detecting the positions of the image stage holder (6) and the lens carrier (9), characterised by a storage device (103) for storing a number of positions of the image stage holder (6) and the lens carrier (9) associated with each other in pairs, a calculating device (101) designed to calculate the position of the lens carrier (9) in association with a desired position of the image stage holder (6) that differs from the stored positions by means of interpolation between the mutually associated stored positions adjacent to that desired position, and a motor drive (12 to 17) for moving the lens carrier (9) into the position calculated.

7. Device according to claim 6, characterised in that the storage and calculating device (103, 101) are parts of a microprocessor system (100).

8. Device according to claim 6, characterised in that the means for position detection have a quantisation device (18, 19, 22, 23, 24) for converting every position of the image stage holder (6) and the lens carrier (9) into a digital numerical value characterising the particular position.

9. Device according to claim 8, characterised in that the quantisation device for the positions of the lens carrier (9) has a rotating disc (18) with a series of reference marks which is dynamically coupled to the lens carrier (9), and a detector and counter (19) for the reference marks during the rotation of the disc (18).

10. Device according to claim 9, characterised in that the reference marks on the rotating disc (18) are holes or gaps arranged in circular lines, and the detector and counter (19) comprises an optical reader.

11. Device according to one of claims 9 and 10, characterised in that the rotating disc (18) sits firmly on a threaded socket (17) which is rotatable in a fixed plane relative to the image stage holder (6) and receives a threaded rod (12) fastened at one end to the lens carrier (9).

12. Device according to claim 11, characterised in that the lens carrier (9) is movable by a drive (13) which is coupled to the threaded socket (17).

13. Device according to claim 12, characterised in that by engagement of a stop element (20) of the lens carrier (9) in a complementary stop element (21) of the threaded socket (17) a pre-determined end position of the lens carrier (9) is set.

14. Device according to one or more of the preceding claims 7 to 13, characterised in that the counting direction of the counter is governed by the polarity of the supply voltage of the electrical drive.

## Revendications

1. Procédé pour la mise au point automatique dans un agrandisseur ou un appareil de copie photographique avec une échelle d'agrandissement variable et comprenant un plan de copie, un dispositif de maintien du support d'image (6) pouvant être déplacé par rapport au plan de copie et un support optique (9) pouvant être déplacé par rapport au dispositif de maintien du support d'image (6) ainsi que des moyens (12,17,18,19,22,23,24) pour la détection des positions du dispositif de maintien du support d'image (6) et du support optique (9), caractérisé en ce que :
   - dans une phase de calibrage pour un certain nombre de positions du dispositif de maintien du support d'image (6) en fonction de rapports d'agrandissement différents, les positions de mise au point correspondantes du support optique (9) sont recherchées manuellement et les valeurs de position du dispositif de maintien du support d'image (6) et du support optique (9) correspondant à chaque rapport d'agrandissement sont enregistrées ;
   - dans la phase de mise au point automatique, la position de mise au point du support optique (9) correspondant à un quelconque rapport d'agrandissement en fonction d'une quelconque position du dispositif de maintien du support d'image (6) est déterminée par le calcul, au moyen d'une interpolation entre les positions de mise au point enregistrées voisines de la position correspondant au rapport d'agrandissement, et le dispositif de maintien du support d'image (6) est amené par un moteur (13) dans la position déterminée.

2. Procédé selon la revendication 1, caractérisé en ce que les positions de mise au point sont déterminées par un procédé d'interpolation mathématique d'ordre élevé à partir du nombre de positions enregistrées.

3. Procédé selon la revendication 1, caractérisé en ce que les valeurs de position sont détectées à l'aide d'un capteur de mesure incrémentiel par rapport à une position de départ définie, qui correspond à une valeur de départ fixe du capteur de mesure.

4. Procédé selon la revendication 3, caractérisé en ce que pour l'équilibrage à zéro du dispositif de mesure de la position, la position de départ est atteinte automatiquement lors de la mise en marche de l'agrandisseur et/ou lorsque l'opérateur entre l'ordre correspondant pendant le fonctionnement.

5. Procédé selon l'une ou l'ensemble des revendications précédentes, caractérisé en ce qu'une position de mise au point déterminée est finalement approchée dans une direction de déplacement préférée.

6. Dispositif pour la mise en oeuvre du procédé selon l'une ou l'ensemble des revendications 1 à 5 dans un agrandisseur ou un appareil de copie photographique avec un plan de copie, un dispositif de maintien du support d'image (6) pouvant être déplacé par rapport au plan de copie et un support optique (9) pouvant être déplacé par rapport au dispositif de maintien du support d'image (6) ainsi qu'avec des moyens pour la détection de position (12,17,18,19,22,23,24) du dispositif de maintien du support d'image (6) et du support optique (9), caractérisé en ce qu'il comporte un dispositif d'enregistrement (103) pour l'enregistrement d'un certain nombre de positions du dispositif de maintien du support d'image (6) et du support optique (9) en relation entre elles par paires, un dispositif de calcul (101) conçu pour calculer la position du support optique (9) en relation avec une quelconque position du dispositif de maintien du support d'image (6) différente des positions enregistrées au moyen d'une interpolation entre les positions enregistrées en relation l'une avec l'autre et voisines de la position souhaitée, ainsi qu'un entraînement à moteur (12 à 17) pour le déplacement du support optique (9) dans la position calculée.

7. Dispositif selon la revendication 6, caractérisé en ce que le dispositif d'enregistrement et de calcul (103,101) fait partie d'un système de microprocesseur (100).

8. Dispositif selon la revendication 6, caractérisé en ce que les moyens pour la détection de position présentent un dispositif de quantification (18,19,22,23,24) pour la conversion de chaque position du dispositif de maintien du support d'image (6) et du support optique (9) en une valeur chiffrée numérique caractérisant chaque position.

9. Dispositif selon la revendication 8, caractérisé en ce que le dispositif de quantification pour les positions du support optique (9) présente un disque rotatif (18) couplé de manière dynamique avec celui-ci et pourvu d'une rangée de signes de référence ainsi qu'un dispositif de détection et de comptage (19) des signes de référence pendant la rotation du disque (18).

10. Dispositif selon la revendication 9, caractérisé en ce que les signes de référence sur le disque rotatif (18) sont des trous ou des fentes disposés sur une ligne circulaire et le dispositif de détection et de comptage (19) comprend un lecteur optique.

11. Dispositif selon l'une quelconque des revendications 9 ou 10, caractérisé en ce que le disque rotatif (18) repose sur une douille filetée (17), qui peut effectuer une rotation dans un plan fixe par rapport au dispositif de maintien du support d'image (6) et reçoit une tige filetée (12) fixée par une extrémité au support optique (9).

12. Dispositif selon la revendication 11, caractérisé en ce que le support optique (9) peut être déplacé par un entraînement (13) couplé avec la douille filetée (17).

13. Dispositif selon la revendication 12, caractérisé en ce que la mise en prise d'un élément de butée (20) du support optique (9) dans un élément de butée (21) complémentaire de la douille filetée (17), fixe une position finale prédéterminée du support optique (9).

14. Dispositif selon l'une ou l'ensemble des revendications 7 à 13, caractérisé en ce que le sens de comptage du dispositif de comptage est déterminé par la polarité de la tension d'alimentation de l'entraînement électrique.

EP 0 261 407 B1

Fig. 1

Fig. 2